# EUROPÄISCHE PATENTSCHRIFT

(11) **EP 1 343 838 B1**
(45) Veröffentlichungstag und Bekanntmachung des Hinweises auf die Patenterteilung: **06.04.2005**
(21) Anmeldenummer: 01270189.2
(22) Anmeldetag: 05.12.2001
(51) Int. Cl.: C08K 5/17, C08K 3/16, C08L 27/04

(54) **STABILISATORSYSTEM ZUR STABILISIERUNG HALOGENHALTIGER POLYMERE**
STABILIZER SYSTEM FOR STABILIZING POLYMERS THAT CONTAIN HALOGEN
SYSTEME D'AGENTS STABILISANTS POUR STABILISER DES POLYMERES A BASE D'HALOGENE

(30) Priorität: 13.12.2000 DE 10061935
(43) Veröffentlichungstag der Anmeldung: 17.09.2003
(73) Patentinhaber: Crompton Vinyl Additives GmbH, 68623 Lampertheim (DE)
(72) Erfinder: FRIEDRICH, Hans-Helmut, 64686 Lautertal-Gadernheim (DE); KUHN, Karl-Josef, 64686 Lautertal-Gadernheim (DE); WEHNER, Wolfgang, 64673 Zwingenberg (DE); HOPFMANN, Thomas, 64653 Lorsch (DE)
(86) Internationale Anmeldenummer: PCT/EP2001/014290
(87) Internationale Veröffentlichungsnummer: WO 2002/048249

(56) Entgegenhaltungen:
- DE-B- 2 914 312
- FR-A- 1 173 940
- US-A- 2 874 138
- US-A- 3 288 744
- US-A- 3 657 183
- US-A- 4 189 550
- PATENT ABSTRACTS OF JAPAN vol. 017, no. 345 (C-1077), 30. Juni 1993 (1993-06-30) & JP 05 043838 A (SEKISUI CHEM CO LTD), 23. Februar 1993 (1993-02-23)
- DATABASE WPI Section Ch, Week 198609 Derwent Publications Ltd., London, GB; Class A18, AN 1986-058392 XP002198581 & JP 61 009451 A (NISSON FERO YUKI KK), 17. Januar 1986 (1986-01-17)
- DATABASE WPI Section Ch, Week 198414 Derwent Publications Ltd., London, GB; Class A17, AN 1984-084501 XP002198582 & JP 59 033338 A (KOHJIN CO LTD), 23. Februar 1984 (1984-02-23)

## Beschreibung

Die Erfindung betrifft Stabilisatormischungen umfassend mindestens ein Perchlorat-Salz und ein Alkanolamin, die sich zur Stabilisierung halogenhaltiger Polymere eignen.

Zum Beispiel kann PVC als halogenhaltiges Polymer durch eine Reihe von Zusatzstoffen stabilisiert werden. Verbindungen der Schwermetalle Blei, Barium und Cadmium sind dafür besonders gut geeignet, sind jedoch heute aus ökologischen Gründen oder wegen ihres Schwermetallgehalts umstritten (vgl. "Kunststoffadditive", R. Gächter/H. Müller, Carl Hanser Verlag, 3. Aufl. 1989, Seiten 303-311 (siehe auch 4. Auflage aus 2001) und "Kunststoff Handbuch PVC", Band 2/1, W. Becker/D. Braun, Carl Hanser Verlag, 2. Aufl., 1985, Seiten 531 - 538; sowie Kirk-Othmer:
"Encyclopedia of Chemical Technology", 4^{th} Ed., 1994, Vol. 12, Heat Stabilizers, S. 1071 - 1091).

Man sucht daher weiter nach wirksamen Stabilisatoren und Stabilisatormischungen, welche frei von Blei, Barium und Cadmium sind.

Es wurde nun gefunden, daß sich Mischungen aus mindestens einem Alkanolamin der allgemeinen Formel I und mindestens einem Perchlorat-Salz, insbesondere (Erd)/Alkali-Perchlorat, besonders gut zur Stabilisierung von chlorhaltigen Polymeren, insbesondere PVC, eignen.

Ein Gegenstand der vorliegenden Erfindung sind daher Stabilisatormischungen, umfassend mindestens
a) ein Perchlorat-Salz und
b) ein Alkanolamin der Formel (I) 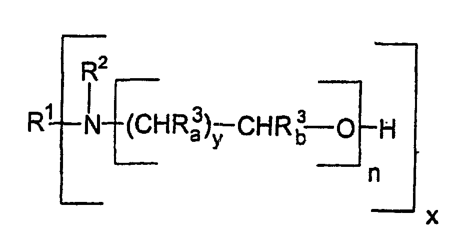
worin bedeuten
x = 1, 2 oder 3;
y = 1, 2, 3, 4, 5 oder 6;
n = 1 - 10;
R¹,R² = unabhängig voneinander H, C₁-C₂₂-Alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-Alkenyl, C₂-C₁₈-Acyl, C₄-C₈-Cycloalkyl, welches in β-Stellung OH-substituiert sein kann, C₆-C₁₀-Aryl, C₇-C₁₀-Alkaryl oder C₇-C₁₀-Aralkyl, oder wenn x = 1, können R¹ und R² zusätzlich zusammen mit dem N einen geschlossenen 4-10 gliedrigen Ring aus Kohlenstoffatomen und gegebenenfalls bis zu 2 Heteroatomen bilden, oder wenn x = 2, kann R¹ zusätzlich für C₂-C₁₈-Alkylen stehen, das an beiden β-Kohlenstoffatomen mit OH substituiert und/oder durch 1 oder mehrere O-Atome und/oder 1 oder mehrere NR²-Gruppen unterbrochen sein kann, oder für dihydroxysubstituiertes Tetrahydrodicyclopentadienylen, dihydroxysubstituiertes Ethylcyclohexanylen, dihydroxysubstituiertes 4,4'-(Bisphenol-Adipropylether)ylen, Isophoronylen, Dimethylcyclohexanylen, Dicyclohexylmethanylen oder 3,3'-Dimethyldicyclohexylmethanylen stehen, und wenn x = 3, kann R¹ zusätzlich für trihydroxysubstituiertes (Tri-N-propylisocyanurat)triyl stehen;
R³ₐ, R³_{b} = unabhängig voneinander C₁-C₂₂-Alkyl, C₂-C₆-Alkenyl, C₆-C₁₀-Aryl, H oder CH₂-X-R⁵ , wobei X = O, S, -O-CO- oder -CO-O-;
R⁴ = C₁-C₁₈-Alkyl/Alkenyl oder Phenyl; und
R⁵ = H, C₁-C₂₂-Alkyl, C₂-C₂₂-Alkenyl oder C₆-C₁₀-Aryl.

Ein weiterer Gegenstand der Erfindung sind Stabilisatormischungen, umfassend mindestens
a) ein Perchlorat-Salz und
b) ein Umsetzungsprodukt aus einem mono- oder polyfunktionellen Epoxid und Ammoniak oder einem mono- oder polyfunktionellen Dialkyl(Aryl)- oder Monoalkyl(Aryl)amin.

Bei den Alkanolaminen der allgemeinen Formel (I) handelt es sich z.B. um Verbindungen mit R¹,R² = Methyl, Ethyl, Propyl, Butyl, Cyclohexyl, Octyl, Lauryl, Tetradecyl, Hexadecyl, Stearyl, Oleyl, Allyl, Phenyl oder Benzyl, Hydroxyalkyl und R³ = H, Methyl, Ethyl, Propyl oder Butyl. Bevorzugt sind Alkanolamine mit R¹ = Lauryl, Tetradecyl, Hexadecyl, Stearyl, Oleyl, wobei R² = Hydroxyalkyl ist. Weiter können Ethoxylate und Propoxylate von Triethanolund Triisopropanolamin sowie Fettaminen pflanzlicher oder tierischer Provenienz eingesetzt werden. Bevorzugt sind Trialkanolamine und Mono-Alkyl-/Alkenyl-Dialkanolamine mit R³ = H oder Methyl und y = 1, insbesondere Fettamine, die zweifach mit Ethylen- oder Propylenoxid umgesetzt wurden. Weitere Verbindungen, die sehr gut geeignet sind, können der nachfolgenden Liste entnommen werden.

Methyl- oder Dimethylamin zweifach oder einfach umgesetzt mit Ethylen- oder Propylenoxid.

Propyl- oder Dipropylamin zweifach oder einfach umgesetzt mit Ethylen- oder Propylenoxid.

Isopropyl- oder Diisopropylamin zweifach oder einfach umgesetzt mit Ethylen- oder Propylenoxid.

Butyl- oder Dibutylamin zweifach oder einfach umgesetzt mit Ethylen- oder Propylenoxid.

Isobutyl- oder Diisobutylamin zweifach oder einfach umgesetzt mit Ethylen- oder Propylenoxid.

Pentyl- oder Dipentylamin zweifach oder einfach umgesetzt mit Ethylen- oder Propylenoxid.

Isopentyl- oder Diisopentylamin zweifach oder einfach umgesetzt mit Ethylen- oder Propylenoxid.

Hexyl- oder Dihexylamin zweifach oder einfach umgesetzt mit Ethylen- oder Propylenoxid.

Isohexyl- oder Diisohexylamin zweifach oder einfach umgesetzt mit Ethylen- oder Propylenoxid.

Heptyl- oder Diheptylamin zweifach oder einfach umgesetzt mit Ethylen- oder Propylenoxid.

Isoheptyl- oder Diisoheptylamin zweifach oder einfach umgesetzt mit Ethylen- oder Propylenoxid.

Octyl- oder Dioctylamin zweifach oder einfach umgesetzt mit Ethylen- oder Propylenoxid.

Isooctyl- oder Diisooctylamin zweifach oder einfach umgesetzt mit Ethylen- oder Propylenoxid.

Nonyl- oder Dinonylamin zweifach oder einfach umgesetzt mit Ethylen- oder Propylenoxid.

Isononyl- oder Diisononylamin zweifach oder einfach umgesetzt mit Ethylen- oder Propylenoxid.

Decyl- oder Didecylamin zweifach oder einfach umgesetzt mit Ethylen- oder Propylenoxid.

Isodecyl- oder Diisodecylamin zweifach oder einfach umgesetzt mit Ethylen- oder Propylenoxid.

Undecyl- oder Diundecylamin zweifach oder einfach umgesetzt mit Ethylen- oder Propylenoxid.

Isoundecyl- oder Diisoundecylamin zweifach oder einfach umgesetzt mit Ethylen- oder Propylenoxid.

Dodecyl- oder Didodecylamin zweifach oder einfach umgesetzt mit Ethylen- oder Propylenoxid.

Isododecyl- oder Diisododecylamin zweifach oder einfach umgesetzt mit Ethylen- oder Propylenoxid.

Tridecyl- oder Ditridecylamin zweifach oder einfach umgesetzt mit Ethylen- oder Propylenoxid.

Isotridecyl- oder Diisotridecylamin zweifach oder einfach umgesetzt mit Ethylen- oder Propylenoxid.

Tetradecyl- oder Ditetradecylamin zweifach oder einfach umgesetzt mit Ethylen- oder Propylenoxid.

Hexadecyl- oder Dihexadecylamin zweifach oder einfach umgesetzt mit Ethylen- oder Propylenoxid.

Octadecyl- oder Dioctadecylamin zweifach oder einfach umgesetzt mit Ethylen- oder Propylenoxid.

Eicosyl- oder Dieicosylamin zweifach oder einfach umgesetzt mit Ethylen- oder Propylenoxid.

Docosyl- oder Didocosylamin zweifach oder einfach umgesetzt mit Ethylen- oder Propylenoxid.

N-Methylbutylamin umgesetzt mit Ethylen- oder Propylenoxid.

N-Ethylbutylamin umgesetzt mit Ethylen- oder Propylenoxid.

Allyl- oder Diallylamin zweifach oder einfach umgesetzt mit Ethylen- oder Propylenoxid.

Crotyl- oder Dicrotylamin zweifach oder einfach umgesetzt mit Ethylen- oder Propylenoxid.

Octadecenyl- oder Dioctadecenylamin zweifach oder einfach umgesetzt mit Ethylen- oder Propylenoxid.

Benzyl- oder Dibenzylamin zweifach oder einfach umgesetzt mit Ethylen- oder Propylenoxid.

Cyclohexyl- oder Dicyclohexylamin zweifach oder einfach umgesetzt mit Ethylen- oder Propylenoxid.

N-Methylcyclohexylamin umgesetzt mit Ethylen- oder Propylenoxid.

N-Ethylcyclohexylamin umgesetzt mit Ethylen- oder Propylenoxid.

4-Vinyl-1-cyclohexen-diepoxid zweifach umgesetzt mit Diethanol- bzw. Diisopropanolamin.

Dicyclopentadien-diepoxid zweifach umgesetzt mit Diethanol- bzw. Diisopropanolamin.

Bisphenol A-diglycidylether zweifach umgesetzt mit Diethanol- bzw. Diisopropanolamin.

Trisglycidylisocyanurat dreifach umgesetzt mit Diethanol- bzw. Diisopropanolamin.

Bevorzugt sind Trialkanolamine und Mono-Alkyl/Alkenyl-Dialkanolamine mit R³ₐ,R³_{b} unabhängig voneinander H oder Methyl und y = 1.

Es zeigte sich, dass sich Verbindungen der allgemeinen Formel (I) mit y = 1-6, d.h. mit bis zu 6 Methylengruppen zwischen der Aminogruppe und dem hydroxy-substituierten Kohlenstoffatom, zur Verwendung als PVC-Stabilisator in Kombination mit einem Perchlorat-Salz eignen.

Erfindungsgemäß können auch Verbindungen der allgemeinen Formel (I) eingesetzt werden mit x = 2, die also zwei Hydroxyalkylaminogruppen pro Molekül aufweisen. Beispiele dafür sind u.a. N,N,N',N'-Tetrakis(2-hydroxyethyl)ethylendiamin, N,N,N',N'-Tetrakis(2-hydroxy-1-propyl)ethylendiamin, N,N,N',N'-Tetrakis(2-hydroxyethyl)propylendiamin oder N,N,N',N'-Tetrakis(2-hydroxy-1-propyl)propylendiamin und N,N,N',N'-Tetrakis(2-hydroxyethyl)hexamethylendiamin, wobei Vierfachumsetzungen von 1,6-Hexamethylen- oder 1,8-Octamethylendiamin bzw. Neopentandiamin mit Ethylen- oder Propylenoxid bevorzugt sind oder analoge Umsetzungen von Bisaminomethylcyclohexan, Isophorondiamin, 4,4'-Diaminodicyclohexylmethan oder 3,3'-Dimethyl-4,4'diaminodicyclohexylmethan.

Erfindungsgemäß können auch Verbindungen der allgemeinen Formel (I) eingesetzt werden mit x = 3, die also drei Hydroxyalkylaminogruppen pro Molekül aufweisen. Ein Beispiel dafür ist ein Umsetzungsprodukt von Trisglycidylisocyanurat mit Mono- oder Diethanolamin oder Mono- oder Dipropanolamin.

Die Alkanolamine der allgemeinen Formel (I) sind käufliche Chemikalien oder können nach bekannten Methoden durch N-Alkylierung eines entsprechenden Amins oder Ammoniak hergestellt werden (vgl. Kirk-Othmer, Vol. 2, Alkanolamines).

Beispiele für die.bevorzugten Alkanolamine der allgemeinen Formel (I) sind Tris(2-hydroxyethyl)amin, Tris(2-hydroxy-1-propyl)amin, Bis(2-hydroxyethyl)-2-hydroxy-1-propylamin, N-*n*-Butyl-N,N-bis(2-hydroxyethyl)amin, N,N-Bis(*n*-butyl)-N-(2-hydroxyethyl)amin, N-(3-*n*-Butyloxy-2-hydroxy-1-propyl)-N,N-bis(2-hydroxyethyl)amin, N-(1,3-dihydroxy-2-hydroxymethyl-2-propyl)-N,N-bis(2-hydroxyethyl)amin, N,N-Bis(2-hydroxyethyl)-N-palmitylamin, N,N-Bis(2-hydroxyethyl)-N-oleylamin, N,N-Bis(2-hydroxyethyl)-N-stearylamin, N,N-Bis(2-hydroxyethyl)-N-stearylamin, N-(2-Hydroxyethyl)morpholin oder N-(2,3-dihydroxy-1-propyl)morpholin, Bis-hydroxyethylpiperazin oder Bishydroxyisopropylpiperazin und Umsetzungsprodukte von Glycidylethern mit mono-, di-Alkylamin oder Ammoniak sowie den davon abgeleiteten Alkanolaminen, wie beispielsweise Ethanolamin, Diethanolamin, n-Propanolamin, i-Propanolamin, n-Dipropanolamin oder i-Dipropanolamin.

Ganz besonders bevorzugt sind Additionsprodukte von Olefinoxiden wie Octen-, Decen-, Dodecen-, Tetradecen-, Hexadecen-, Octadecen-, Eicosen- und Docosenoxid sowie Epoxystearylalkohol mit Diethanol- oder Diisopropanolamin.

Diese Verbindungen mit β-ständiger OH-Funktion an beiden Enden einer längeren Alkylkette wie z. B. N-(2-Hydroxyhexadecyl)-diethanolamin, N-(2-Hydroxy-3-octyloxypropyl)diethanolamin, N-(2-Hydroxy-3-decyloxypropyl)diethanolamin, N-(2-Hydroxy-3-octyloxypropyl)diethanolamin und Bis-N-(2-Hydroxy-3-phenyloxypropyl)ethanolamin eignen sich besonders als Komponente in den erfindungsgemäßen Stabilisatorsystemen.

Die Aufzählung ist nur beispielhaft und erhebt nicht den Anspruch auf Vollständigkeit.

Die Perchlorat-Salze sind dem Fachmann bekannt. Beispiele sind diejenigen der Formel M(ClO₄)ₙ, wobei M für Li, Na, K, Mg, Ca, Sr, Ba, Zn, Al, La, Ce oder ein Hydrotalcitschichtgitterkation steht; n ist entsprechend der Wertigkeit von M 1, 2 oder 3 oder bei Vorliegen eines Hydrotalcitschichtgitterkations O < n ≦ 1.

Die Perchlorat-Salze können dabei in verschiedenen gängigen Darreichungsformen (Formulierungen) eingesetzt werden; z.B. als Salz oder als Lösung in Wasser oder einem organischen Solvens bzw. aufgezogen auf ein Trägermaterial wie PVC, Ca-Silikat, Zeolithe oder Hydrotalcite. Beispiele für solche Perchlorat-Formulierungen sind auch z.B. Perchloratsalze, die mit Alkoholen (Polyolen, Cyclodextrinen) oder Ätheralkoholen bzw. Esteralkoholen oder Kronenether komplexiert oder gelöst sind. Weitere Ausführungsformen werden beschrieben in EP 0 394 547, EP 0 457 471 und WO 94/24200.

Vorzugsweise werden Natrium/Kaliumperchlorat-Salze verwendet.

Die Verwendung von definierten Ethanolammonium-Perchlorat-Salzen zur Verhinderung von Verfärbungen von chlorhaltigem Harz ist aus JP-A 61-9451 bekannt. Es handelt sich dabei um Perchlorat-Salze mit Ammoniumsalz-Struktur, die durch Zugabe von primären, sekundären oder tertiären Ethanolaminen zu einer Perchlorsäurelösung gewonnen werden können. Ammoniumperchlorat-Salze sind generell hitze- und schockempfindliche Verbindungen und bergen daher eine gewisse Explosionsgefahr, was sie für großtechnische Anwendungen in der Kunststoffverarbeitung ungeeignet macht.

Ein weiterer Gegenstand der Erfindung sind Kombinationen der erfindungsgemäßen Stabilisatormischungen mit mindestens einem anderen üblichen Additiv bzw. Stabilisator. Teil der Erfindung sind somit Kombinationen der Stabilisatormischungen umfassend mindestens ein Perchlorat-Salz und mindestens eine Verbindung der allgemeinen Formel (I) mit mindestens einem anderen üblichen Additiv bzw. Stabilisator. Bevorzugt sind Phosphite, Polyole und Disaccharidalkohole, Glycidylverbindungen, Hydrotalcite, Zeolithe (Alkali bzw. Erdalkalialumosilikate), Füllstoffe, Metallseifen, Alkali und Erdalkali-Verbindungen, Gleitmittel, Weichmacher, Pigmente, epoxidierte Fettsäureester und andere Epoxidverbindungen, Antioxidantien, UV-Absorber, Lichtschutzmittel, optische Aufheller und Treibmittel.

Besonders bevorzugt sind epoxidierte Fettsäureester und andere Epoxidverbindungen, Polyole, Erdalkaliseifen, Zeolithe, Hydrotalcite und Phosphite. Ganz besonders bevorzugt sind Phosphite, Phosphite in Kombination mit Polyolen, entwässerte Hydrotalcite sowie Zeolithe.

Mitumfasst sind auch die möglichen Reaktionsprodukte der eingesetzten Komponenten.

Bevorzugt sind auch Stabilisatormischungen, die zusätzlich ein Enamin, ein Indol oder einen Harnstoff enthalten. Beispiele für geeignete Verbindungen sind 1,4-Butandiolbis(β-aminocrotonat), Thiodiethylenglycol-bis(β-aminocrotonat), 2-Phenylindol, 2-Phenyllaurylindol, N,N'-Diphenylthioharnstoff. Weitere Beispiele sind in der deutschen Patentanmeldung 101 07 329 des Anmelders beschrieben.

Beispiele für solche zusätzlichen Komponenten sind weiter unten aufgeführt und erläutert (vgl. "Handbook of PVC-Formulating" von E. J. Wickson, John Wiley & Sons, New York 1993).

### Polyole und Disaccharidalkohole

Als Verbindungen dieses Typs kommen beispielsweise in Beträcht:
Pentaerythrit, Dipentaerythrit, Tripentaerythrit, Trimethylolethan, Bistrimethylolpropan, Polyvinylalkohol, Bistrimethylolethan, Trimethylolpropan,Zucker, Zuckeralkohole. Bevorzugt sind davon die Disaccharidalkohole.
Verwendung finden können auch Polyolsirupe, wie Sorbit-, Mannit- und Maltitsirup.
Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewandt werden.

### Glycidylverbindungen

Sie enthalten die Glycidylgruppe 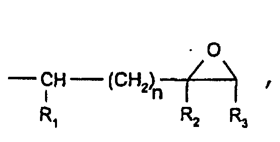 wobei diese direkt an Kohlenstoff, Sauerstoff-, Stickstoff- oder Schwefelatome gebunden ist, und worin entweder R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

Vorzugsweise finden Glycidylverbindungen mit zwei funktionellen Gruppen Verwendung. Es können aber auch prinzipiell Glycidylverbindungen mit einer, drei oder mehr funktionellen Gruppen eingesetzt werden.
Vorwiegend werden Diglycidylverbindungen mit aromatischen Gruppen eingesetzt.
Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Hydrotalcite

Die chemische Zusammensetzung dieser Verbindungen ist dem Fachmann bekannt, z. B. aus den Patentschriften DE 3 843 581, US 4,000,100, EP 0 062 813 und WO 93/20135. Verbindungen aus der Reihe der Hydrotalcite können durch die folgende allgemeine Formel

M²⁺ ₁₋ₓ M³⁺ ₓ(OH)₂ (A^{b-})_{x/b} · d. H₂O

beschrieben werden, wobei
M²⁺ = eines oder mehrere der Metalle aus der Gruppe Mg, Ca, Sr, Zn oder Sn ist,
M³⁺ = Al, oder B ist,
Aⁿ ein Anion mit der Valenz n darstellt, b eine Zahl von 1 - 2 ist,
0 < x 0,5 ist,
d eine Zahl von 0 - 20 ist.
Bevorzugt sind Verbindungen mit
Aⁿ = OH⁻, ClO₄⁻, HCO₃⁻, CH₃COO⁻, C₆H₅COO⁻, CO₃²⁻,
(CHOHCOO)₂²⁻, (CH₂COO)₂²⁻, CH₃CHOHCOO⁻, HPO₃⁻oder HPO₄²⁻. Beispiele für Hydrotalcite sind
Al₂O₃·6MgO·CO₂·12H₂O (i), Mg_{4,5}Al₂(OH)₁₃·CO₃·3,5H₂O (ii) , 4MgO·Al₂O₃·CO₂·9H₂O (iii) , 4MgO·Al₂O₃·CO₂ ·6H₂O, ZnO·3MgO·Al₂O₃·CO₂·8-9H₂O und ZnO·3MgO·Al₂O₃·CO₂·5-6H₂O . Ganz besonders bevorzugt sind die Typen Alkamizer 2, Alkamizer P 93-2 (ex Kyowa) und L-CAM (Lithiummodifizierter Hydrotalcit, ex Fuji). Bevorzugt werden entwässerte Hydrotalcite eingesetzt.

### Zeolithe (Alkali bzw. Erdalkalialumosilikate)

Sie können durch die folgende allgemeine Formel M_{x/n}[(AlO₂)ₓ(SiO₂)_{y}] · wH₂O beschrieben werden, worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist. Beispiele für Zeolithe sind Natriumalumosilikate der Formeln
Na₁₂Al₁₂Si₁₂O₄₈ · 27 H₂O [Zeolith A], Na₆Al₆Si₆O₂₄ · 2 NaX · 7,5 H₂O, X= OH, Halogen, ClO₄ [Sodalith]; Na₆Al₆Si₃₀O₇₂ · 24 H₂O; Na₈Al₈Si₄₀O₉₆ · 24 H₂O; Na₁₆Al₁₆Si₂₄O₈₀ · 16 H₂O; Na₁₆Al₁₆Si₃₂O₉₆ · 16 H₂O; Na₅₆Al₅₆Si₁₃₆O₃₈₄ · 250 H₂O [Zeolith Y], Na₈₆Al₈₆Si₁₀₆O₃₈₄ · 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ · 20 H₂O ; Ca_{4,5}Na₃[(AlO₂)₁₂(SiO₂)₁₂] · 30 H₂O; K₉Na₃[(AlO₂)₁₂(SiO₂)₁₂] · 27 H₂O.

Ganz besonders bevorzugt sind Na-Zeolith A und Na-Zeolith P.
Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymere, angewandt werden.

### Füllstoffe

Füllstoffe wie beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide verwandt. Bevorzugt ist Kreide (HANDBOOK OF PVC FORMULATING E. J. Wickson, John Wiley & Sons, Inc., 1993, SS. 393 - 449) und Verstärkungsmittel (TASCHENBUCH der Kunststoffadditive, R. Gächter & H. Müller, Carl Hanser, 1990, S. 549 - 615).
Die Füllstoffe können in einer Menge von vorzugsweise mindestens 1 Teil, beispielsweise 5 bis 200, zweckmäßig 5 bis 150 und insbesondere 5 bis 100 Gew.-Teilen, bezogen auf 100 Gew.-Teile PVC, eingesetzt werden.

### Metallseifen

Metallseifen sind in der Hauptsache Metallcarboxylate, bevorzugt längerkettiger Carbonsäuren. Geläufige Beispiele sind Stearate und Laurate, auch Oleate und Salze kürzerkettiger aliphatischer oder aromatischer Carbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Zitronensäure, Benzoesäure, Salicylsäure, Phthalsäuren, Hemimellithsäure, Trimellithsäure, Pyromellithsäure.

Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5^{th} Ed., Vol. A16 (1985), S. 361 ff.).
Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

### Alkali und Erdalkali-Verbindungen

Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, Ca(OH₂), MgO, Mg(OH)₂, Sr(OH)₂, Al(OH)₃, CaCO₃ und MgCO₃ (auch basische Carbonate, wie beispielsweise Magnesia Alba und Huntit), sowie fettsaure Na- und K-Salze. Bei Erdalkali- und Zn-Carboxylaten können auch deren Addukte mit MO oder M(OH)₂ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali- und/oder Aluminiumcarboxylate eingesetzt.

### Gleitmittel

Als Gleitmittel kommen beispielsweise in Betracht:
Montanwachs, Fettsäureester, PE-Wachse, Amidwachse, Chlorparaffine, Glycerinester oder Erdalkaliseifen, ferner Fettketone sowie Gleitmittel auf oder Kombinationen davon, wie in EP 0 259 783 aufgeführt. Bevorzugt ist Calciumstearat.

### Weichmacher

Als organische Weichmacher kommen beispielsweise solche aus den folgenden Gruppen in Betracht:
A) Phthalsäureester: wie bevorzugt Di-2-ethylhexyl-, Diiso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind.
B) Ester aliphatischer Dicarbonsäuren, insbesondere Ester von Adipin-, Azelain- und Sebazinsäure: wie bevorzugt Di-2-ethylhexyladipat und Di-iso-octyladipat.
C) Trimellithsäureester, beispielsweise Tri-2-ethylhexyltrimellithat, Tri-iso-decyltrimellithat (Gemisch), Tri-iso-tridecyltrimellithat, Tri-isooctyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).
D) Epoxyweichmacher: In der Hauptsache sind das epoxidierte ungesättigte Fettsäuren wie z. B. epoxidiertes Sojabohnenöl.
E) Polymerweichmacher: Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester: Eine Definition dieser Ester ist im vorstehend genannten "Taschenbuch der Kunststoffadditive" Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie Reofos® 50 und 95 (Ciba Spezialitätenchemie) .
G) Chlorierte Kohlenwasserstoffe (Paraffine)
H) Kohlenwasserstoffe
I) Monoester, z. B. Butyloleat, Phenoxyethyloleat, Tetrahydrofurfuryloleat und Alkylsulfonsäureester.
J) Glykolester, z. B. Diglykolbenzoate.

Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4^{th}. Ed., Elsevier Publ., 1984, Seiten 165 - 170 angegeben. Es können auch Mischungen unterschiedlicher Weichmacher verwandt werden.
Die Weichmacher können in einer Menge von beispielsweise 5 bis 20 Gew.-Teilen, zweckmäßig 10 bis 20 Gew.-Teilen, bezogen auf 100 Gew.-Teile PVC, angewandt werden. Hart- bzw. Halbhart-PVC enthält bevorzugt bis zu 10 %, besonders bevorzugt bis zu 5 % oder keinen Weichmacher.

### Pigmente

Geeignete Stoffe sind dem Fachmann bekannt. Beispiele für anorganische Pigmente sind TiO₂, Pigmente auf Zirkonoxidbasis, BaSO₄ , Zinkoxid (Zinkweiss) und Lithopone (Zinksulfid/Bariumsulfat), Ruß, Russ-Titandioxid-Mischungen, Eisenoxidpigmente, Sb₂O₃, (Ti,Ba,Sb)O₂, Cr₂O₃, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolöpyrrolpigmente und Anthrachinonpigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.

### Phosphite

Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trilauryl-, Trikresyl-, Trisnonylphenyl-, Tris-2,4-t-butyl-phenyl- oder Tricyclohexylphosphit. Weitere geeignete Phosphite sind verschieden gemischte Aryl-dialkyl. bzw. Alkyl-diarylphosphite wie Phenyldioctyl-, Phenyldidecyl-, Phenyldidodecyl-, Phenylditridecyl-, Phenylditetradecyl-, Phenyldipentadecyl-, Octyldiphenyl-, Decyldiphenyl-, Undecyldiphenyl-, Dodecyldiphenyl-, Tridecyldiphenyl-, Tetradecyldiphenyl-, Pentadecyldiphenyl-, Oleyldiphenyl-, Stearyldiphenyl- und Dodecyl-bis-2,4-dit-butylphenylphosphit.
Weiterhin können auch Phosphite verschiedener Di- bzw. Polyole vorteilhaft verwandt werden: z. B. Tetraphenyldipropylenglykoldiphosphit, Poly(dipropylenglykol)phenylphosphit, Tetra-isodecyldipropylenglykoldiphosphit, Tris-dipropylenglykolphosphit, Tetramethylolcyclohexanol-decyldiphosphit, Tetramethylolcyclohexanol-butoxyethoxy-ethyldiphosphit, Tetramethylolcyclohexanol-nonylphenyldiphosphit, Bisnonylphenyl-di-trimethylolpropandiphosphit, Bis-2-butoxyethyl-di-trimethylolpropandiphosphit, Trishydroxyethylisocyanurat-hexadecyltriphosphit, Didecylpentaerythritdiphosphit, Distearylpentaerythritdiphosphit, Bis-2,4-di-tbutylphenylpentaerythritdiphosphit, sowie Gemische dieser Phosphite und Aryl/alkylphosphit-Gemische der statistischen Zusammensetzung (H₁₉C₉-C₆H₄)O_{1,5}P(OC_{12,13}H_{25,27})_{1,5} oder [C₈H₁₇-C₆H₄-O-]₂P[i-C₈H₁₇O], (H₁₉C₉-C₆H₄)O_{1,5}P(OC_{9,11}H_{19,23})_{1,5}.
Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

### Epoxidierte Fettsäureester und andere Epoxidverbindungen

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE-A-4 031 818.

### Antioxidantien

Alkylierte Monophenole, z. B. 2,6-Di-tert-butyl-4-methylphenol, Alkylthiomethylphenole, z. B. 2,4-Dioctylthiomethyl-6-tert-butylphenol, Alkylierte Hydrochinone, z. B. 2,6-Di-tert-butyl-4-methoxyphenol, Hydroxylierte Thiodiphenylether, z. B. 2,2'-Thio-bis-(6-tert-butyl-4-methylphenol), Alkyliden-Bisphenole, z. B. 2,2'-Methylen-bis-(6-tert-butyl-4-methylphenol), Benzylverbindungen, z. B. 3,5,3',5'-Tetra-tert-butyl-4,4'dihydroxydibenzylether, Hydroxybenzylierte Malonate, z. B. Dioctadecyl-2,2-bis-(3,5-di-tert-butyl-2-hydroxybenzyl)-malonat, Hydroxybenzyl-Aromaten, z. B. 1,3,5-Tris-(3,5-ditert-butyl-4-hydroxybenzyl)-2,4,6-trimethylbenzol, Triazinverbindungen, z. B. 2,4-Bis-octylmercapto-6-(3,5-ditert-butyl-4-hydroxyanilino)-1,3,5-triazin, Phosphonate und Phosphonite, z. B. Dimethyl-2,5-di-tert-butyl-4-hydroxybenzylphosphonat, Acylaminophenole, z. B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dicyclohexyl-4-hydroxyphenyl)-propionsäure, Ester der 3,5-Di-tert-butyl-4-hydroxyphenylessigsäure mit ein- oder mehrwertigen Alkoholen, Amide der beta-(3,5-Di-tert-butyl-4-hydroxyphenyl)-propionsäure, wie z. B. N,N'-Bis-(3,5-ditert-butyl-4-hydroxyphenylpropionyl)-hexamethylendiamin, Vitamin E (Tocopherol) und Abkömmlinge.
Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

### UV-Absorber und Lichtschutzmittel

Beispiele dafür sind: 2-(2'-Hydroxyphenyl)-benztriazole, wie z. B. 2-(2'-Hydroxy-5'-methylphenyl)-benztriazol, 2-Hydroxybenzophenone, Ester von gegebenenfalls substituierten Benzoesäuren, wie z. B. 4-tert-Butyl-phenylsalicylat, Phenylsalicylat, Acrylate, Nickelverbindungen, Oxalsäurediamide, wie z. B. 4,4'-Di-octyloxy-oxanilid, 2,2'-Di-octyloxy-5,5'-di-tert-butyl-oxanilid, 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, Sterisch gehinderte Amine, wie z. B. Bis (2, 2,6,6-tetramethyl-piperidin-4-yl)-sebacat, Bis(2,2,6,6-tetramethyl-piperidin-4-yl)-succinat.

### Treibmittel

Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wilson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.

Ein weiterer Gegenstand der Erfindung sind Zusammensetzungen, die ein chlorhaltiges Polymer und eine erfindungsgemäße Stabilisatormischung enthalten.

Bei diesen Zusammensetzungen sind die Verbindungen der allgemeinen Formeln (I) zur Erzielung der Stabilisierung im chlorhaltigen Polymer zweckmäßig zu 0,01 bis 10, vorzugsweise zu 0,05 bis 5, bezogen auf 100 Gew.-Teile PVC, zu verwenden.

Die Perchlorat-Salze können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Bevorzugt sind Zusammensetzungen, bei denen das Verhältnis von der Verbindung der allgemeinen Formel (I) zum Perchlorat-Salz, bezogen auf das Gewicht, im Bereich von 1.5:1 bis 10:1 liegt.

Beispiele für die zu stabilisierenden chlorhaltigen Polymere sind: Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann.
Bevorzugt ist ein PVC-Homopolymer, auch in Kombination mit Polyacrylaten.

Ferner kommen auch Pfropfpolymerisate von PVC mit EVA, ABS und MBS in Betracht. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht.
Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen, aus (i) 100 Gewichtsteilen PVC, und (ii) 0 -300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat.

Die erfindungsgemäß mitverwendbaren Verbindungen sowie die chlorhaltigen Polymeren sind dem Fachmann allgemein bekannt und werden detailliert beschrieben in "Kunstoffadditive", R. Gächter/H. Müller, Carl Hanser Verlag, 3. Aufl., 1989; in der DE 197 41 778 und der EP-A 99 105 418.0 vom 17.03.1999, auf welche hiermit ausdrücklich Bezug genommen wird.

Die erfindungsgemäße Stabilisierung eignet sich für chlorhaltige Polymerzusammensetzungen, die nicht weichgemachte resp. weichmacherfreie oder im wesentlichen weichmacherfreie Zusammensetzungen darstellen, als auch für weichgemachte Zusammensetzungen.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Folien (auch Luvitherm), PVC-Rohre, Profile, Sidings, Fittings, Bürofolien und Apparatur-Gehäuse (Computer, Haushaltsgeräte).

Bevorzugte andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Fußböden, KFZ-Teile, Weich-Folien, Spritzgussteile, Bürofolien und Folien für Traglufthallen geeignet.
Beispiele für die Anwendung der erfindungsgemäßen Zusammensetzungen als Plastisole sind Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Luvitherm-Folien.

Zweckmäßig kann die Einarbeitung der Stabilisatoren nach folgenden Methoden erfolgen: als Emulsion oder Dispersion (eine Möglichkeit ist z. B. die Form einer pastösen Mischung, ein Vorteil der erfindungsgemäßen Kombination besteht bei dieser Darreichungsform in der Stabilität der Paste); als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze bzw. als Flakes oder Pellets in staubfreier Form als One-Pack.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatormischung und gegebenenfalls weitere Zusätze mit dem PVC vermischt. Hierbei können die Stabilisatoren einzeln oder in Mischung zugegeben werden oder auch in Form sogenannter Masterbatches.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte PVC kann auch zu Schaumstoffen verarbeitet werden. Gegenstand der Erfindung ist somit auch ein Verfahren zur Stabilisierung chlorhaltiger Polymere durch Zusatz der erfindungsgemäßen Stabilisatormischung zu einem chlorhaltigen Polymer, wie auch Gegenstände, die PVC enthalten, das durch die erfindungsgemäße Stabilisatormischung stabilisiert ist.

Ein erfindungsgemäß stabilisiertes PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Folien (auch Luvitherm), PVC-Rohre, Profile, Sidings, Fittings, Bürofolien und Apparatur-Gehäuse (Computer, Haushalteräte). Das erfindungsgemäße PVC eignet sich besonders für Halbhart- und Weich-Rezepturen, insbesondere in Form von Weichrezepturen für Drahtummantelungen, Kabelisolierungen, Fußböden, Tapeten, KFZ-Teile, Weich-Folien, Spritzgussteile oder Schläuche, welche besonders bevorzugt sind. In Form von Halbhart-Rezepturen eignet sich das erfindungsgemäße PVC besonders für Dekorationsfolien, Schaumstoffe, Agrarfolien, Schläuche, Dichtungsprofile und Bürofolien.
Beispiele für die Anwendung des erfindungsgemäßen PVC als Plastisol sind Kunstleder, Fußböden, Textilbeschichtungen, Tapeten, Coil-Coatings- und Unterbodenschutz für Kraftfahrzeuge.

Beispiele für Sinter-PVC-Anwendungen des erfindungsgemäß stabilisierten PVC sind Slush, Slush-Mould und Coil-Coatings für Plastisol-, Halbhart- und Weich-Rezepturen. Näheres hierzu siehe "Kunststoffhandbuch PVC", Band 2/2, W. Becker/H. Braun, 2. Aufl., 1985, Carl Hanser Verlag, Seiten 1236 - 1277.

Die folgenden Beispiele erläutern die Erfindung, ohne sie jedoch zu beschränken. Teile- und Prozentangaben beziehen sich, wie auch in der übrigen Beschreibung, auf das Gewicht.

### Beispiel 1:

Eine Trockenmischung bestehend aus

| | |
|---|---|
| 100,0 Teile | Evipol¹⁾ SH 5730 = PVC K-Wert 57 |
| 5,0 Teile | Paraloid²⁾ BTA III N 2 = MBS-(=Methylmethacrylat-Butadien-Styrol) Modifier |
| 0,5 Teile | Paraloid²⁾ K 120 N = Acrylat Verarbeitungshilfe |
| 0,5 Teile | Paraloid²⁾ K 175 = Acrylat Verarbeitungshilfe |
| 0,3 Teile | Wachs E = Esterwachs (Montan Wachs) (ex BASF) |
| 1,0 Teile | Loxiol® G 16 = Fettsäurepartialester des Glycerins (ex Henkel) |
| 3,0 Teile | ESO = epoxidiertes Sojabohnenöl |
| 0,6 Teile | 30%ige wäßrige Natriumperchlorat-Lösung |

| | |
|---|---|
| ¹⁾ Markenzeichen der Firma EVC | |
| ²⁾ Markenzeichen der Firma Rohm & Haas | |

und jeweils 0.4 Teile eines in der Tabelle 1 angegebenen Stabilisators wurde auf einem Mischwalzwerk 5 Minuten bei 180°C gewalzt. Vom gebildeten Walzfell wurde der Yellowness Index (YI) nach ASTM D-1925-70 bestimmt. Die Ergebnisse sind der Tabelle 2 zu entnehmen. Geringe YI- Werte bedeuten eine gute Stabilisierung bzw. Anfangsfarbe.

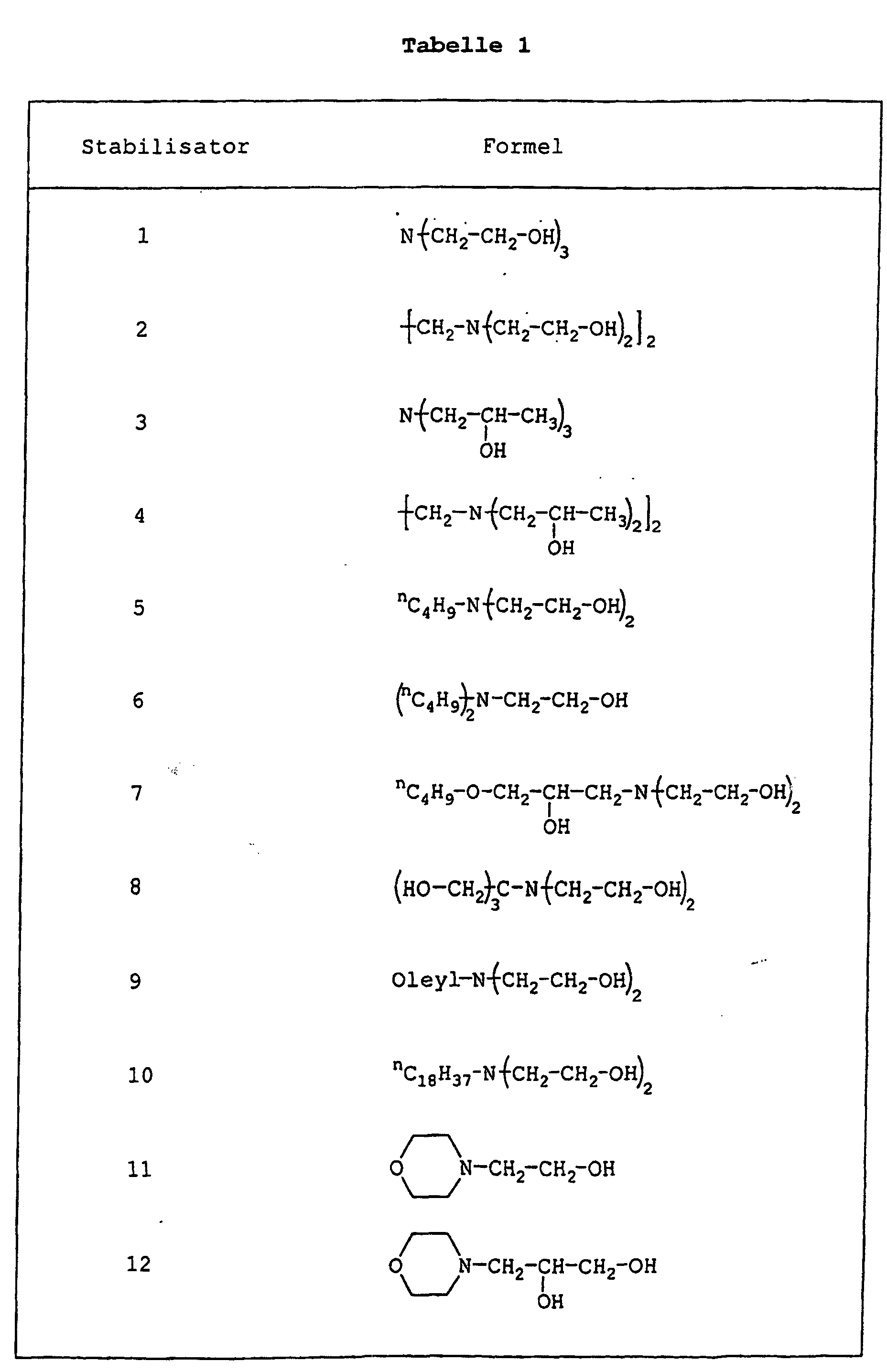

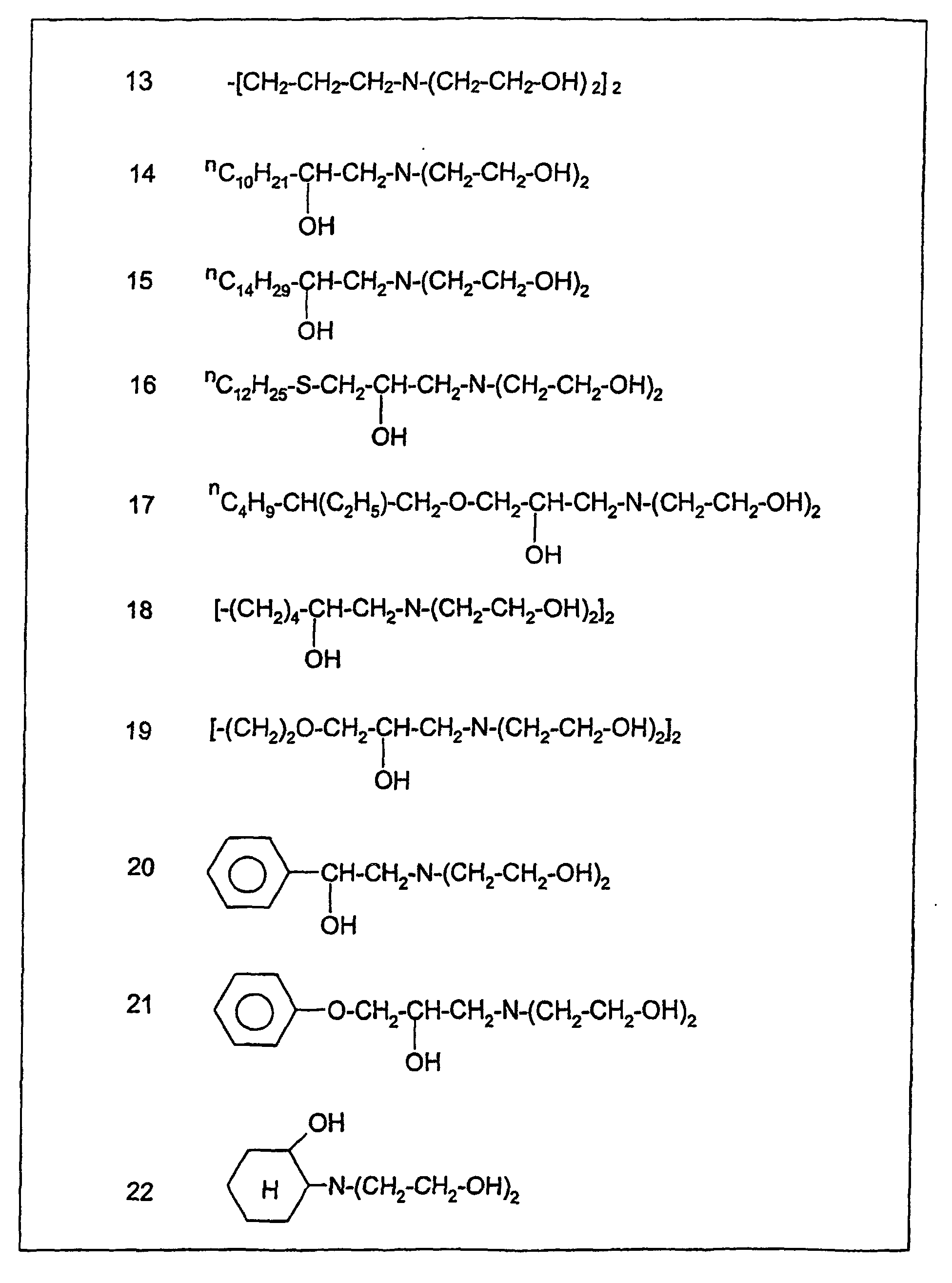

**Tabelle 2**

| **Stabilisator** | **YI-Wert des Walzfells** |
|---|---|
| ohne Stabilisator | 40,17 |
| 1 | 9,49 |
| 2 | 25,14 |
| 3 | 14,15 |
| 4 | 14,46 |
| 5 | 12,96 |
| 6 | 12,80 |
| 7 | 12,96 |
| 8 | 16,41 |
| 9 | 10,94 |
| 10 | 11,02 |
| 11 | 13,79 |
| 12 | 14,29 |
| 13 | 13,92 |

Es zeigt sich, daß die Verwendung von Alkanolaminen in Kombination mit einer Natriumperchlorat-Formulierung zu einer deutlichen Stabilisierung des chlorhaltigen Polymers führt.

### Beispiel 2:

Eine Trockenmischung bestehend aus

| | |
|---|---|
| 100,0 Teile | Solvic 168 PE = PVC K-Wert 68 |
| 2,0 Teile | Calciumhydroxid |
| 0,33 Teile | 30%ige wäßrige Natriumperchlorat-Lösung |
| 0,1 Teile | Calciumstearat |
| 0,4 Teile | Loxiol® G 71 S = Pentaerythrit-Adipat, Ölsäure [2 : 1 : 6] auf Mol-Basis |

und jeweils x Teile eines in der Tabelle 1 angegebenen Stabilisators wurden auf einem Mischwalzwerk 5 Minuten bei 180°C gewalzt. Vom gebildeten Walzfell wurde der Yellowness Index (YI) nach ASTM D-1925-70 bestimmt. Die Ergebnisse sind der Tabelle 3 zu entnehmen. Geringe YI- Werte bedeuten eine gute Stabilisierung bzw. Anfangsfarbe.

**Tabelle 3**

| **Stabilisator** | **X Teile** | **YI-Wert des Walzfells** |
|---|---|---|
| Ohne Stabilisator | | 45,91 |
| 1 | 0,2 | 28,88 |
| 3 | 0,2 | 27,16 |
| 5 | 0,22 | 31,15 |
| 7 | 0,31 | 31,09 |

Es zeigt sich, daß die Verwendung von Alkanolaminen in Kombination mit einer Natriumperchlorat-Formulierung zu einer deutlichen Stabilisierung des chlorhaltigen Polymers führt.

### Beispiel 3: Statischer Hitzetest

Eine Trockenmischung M 1 bestehend aus

| | |
|---|---|
| 100,0 Teile | Evipol¹⁾ SH 5730 = PVC K-Wert 57 |
| 5,0 Teile | Paraloid²⁾ BTA III N 2 = MBS-(=Methylmethacrylat-Butadien-Styrol) Modifier |
| 0,5 Teile | Paraloid²⁾ K 120 N = Acrylat Verarbeitungshilfe |
| 0,5 Teile | Paraloid²⁾ K 175 = Acrylat Verarbeitungshilfe |
| 0,3 Teile | Wachs E = Esterwachs (Montan Wachs) (ex BASF) |
| 1,0 Teile | Loxiol® G 16 = Fettsäurepartialester des Glycerins (ex Henkel) |
| 3,0 Teile | ESO = epoxidiertes Sojabohnenöl |

und die in Tabelle 1 angegebenen Stabilisatoren wurde auf einem Mischwalzwerk 5 Minuten bei 180°C gewalzt. Vom gebildeten Walzfell wurden Testfolienstreifen von 0,3 mm Dicke entnommen. Die Folienproben wurden in einem Ofen (=Mathis-Thermo-Takter) bei 190°C thermisch belastet. Im zeitlichen Abstand von 3 Minuten wurde der Yellowness Index (YI) nach ASTM D-1925-70 bestimmt. Die Ergebnisse sind der folgenden Tabelle 4 zu entnehmen. Geringe YI- Werte bedeuten eine gute Stabilisierung.

**Tabelle 4**

| **Min.** | **M 1 + 0,6 Tle NAP 30**^{**4)**} **YI-Wert** | **M 1 + 0,6 Tle NAP 30**^{**4)**} **+ 0,4 Tle Stab. 1** | **M 1 + 0,6 Tle NAP 30**^{**4)**} **+ 0,4 Tle Stab. 1 +0,75 Tle CH 300**^{**3)**} |
|---|---|---|---|
| 0 | 58,12 | 9,03 | 5,57 |
| 3 | Abbruch | 12,68 | 7,28 |
| 6 | | 15, 62 | 9,16 |
| 9 | | 21,72 | 12,22 |
| 12 | | 33,24 | 18,55 |
| 15 | | 51,93 | 29,97 |
| 18 | | Abbruch | 51,35 |

| | | | |
|---|---|---|---|
| ³⁾Mark CH 300 = gemischtes Aryl/Alkyl-phosphit (ex Crompton) | | | |
| ⁴⁾NAP 30 = 30%ige wäßrige Natriumperchlorat-Lösung | | | |

Es zeigt sich, daß die Verwendung von Alkanolaminen in Kombination mit einer Natriumperchlorat-Formulierung zu einer deutlichen Stabilisierung des chlorhaltigen Polymers führt, wobei die Stabilisierung durch Zugabe von Aryl/Alkyl-phosphit noch weiter gesteigert werden kann.

### Beispiel 4: Statischer Hitzetest

Eine Trockenmischung bestehend aus

| | |
|---|---|
| 100,0 Teile | Evipol¹⁾ SH 7020 = PVC K-Wert 70 |
| 20,0 Teile | Dioctylphtalat |
| 3,0 Teile | ESO = epoxidiertes Sojabohnenöl |
| x Teile | Stabilisator 1 oder 3 |
| y Teile | 30%ige Natriumperchlorat-Lösung in Butyldiglykol |

wurde auf einem Mischwalzwerk 5 Minuten bei 180°C gewalzt. Vom gebildeten Walzfell wurden Testfolienstreifen von 0,3 mm Dicke entnommen. Die Folienproben wurden in einem Ofen (=Mathis-Thermo-Takter) bei 190°C thermisch belastet. Im zeitlichen Abstand von 5 Minuten wurde der Yellowness Index (YI) nach ASTM D-1925-70 bestimmt. Die Ergebnisse sind den folgenden Tabelle 5A und 5B zu entnehmen. Geringe YI- Werte bedeuten eine gute Stabilisierung.

**Tabelle 5A**

| **Min** | **Stabilisator 1 0.7 Teile YI-Wert** | **NaClO**_{**4**}**-Lsg. 0.7 Teile YI-Wert** | **Stab. 1 = 0.5 Teile NaClO**_{**4**}**-Lsg. = 0.2 Teile YI-Wert** |
|---|---|---|---|
| 0 | 18,83 | 8,96 | 6,03 |
| 5 | 24,23 | 9,02 | 6,58 |
| 10 | 41,72 | 24,19 | 10,08 |
| 15 | Abbruch | 45,54 | 20,44 |

**Tabelle 5B**

| **Min** | **Stab. 3 = 0.6 Teile YI-Wert** | **Stab. 3 = 0.6 Teile NaClO**_{**4**}**-Lsg. = 0.2 Teile YI-Wert** |
|---|---|---|
| 0 | 25,72 | 5,71 |
| 5 | 32,13 | 6,43 |
| 10 | 55,20 | 8,65 |
| 15 | | 16,32 |

Es zeigt sich, daß erst die synergistische Kombination von a) des Alkanolamins 1 bzw. 3 und b) der Natriumperchlorat-Formulierung zu einer sehr guten Stabilisierung des chlorhaltigen Polymers führt.

### Beispiel 5: Statischer Hitzetest

Eine Trockenmischung bestehend aus

| | |
|---|---|
| 100,0 Teile | Evipol¹⁾ SH 7020 = PVC K-Wert 70 |
| 44,0 Teile | Dioctylphtalat |
| 6,0 Teile | ESO = epoxidiertes Sojabohnenöl |
| 0,26 Teile | Stabilisator 3 (Tabelle 6A), Stabilisator 9 (Tabelle 6B) |
| 0,04 Teile | Natriumperchlorat x 1 H₂O |
| 0,3 Teile | Loxiol® G 71 S = Pentaerythrit-Adipat-Complexester-Gleitmittel |
| 0,2 Teile | Calciumstearat |

und jeweils 0,6 Teile eines Phosphits wie in den Tabellen 6A und 6B angegeben wurde auf einem Mischwalzwerk 5 Minuten bei 180°C gewalzt. Vom gebildeten Walzfell wurden Testfolienstreifen von 0,5 mm Dicke entnommen. Die Folienproben wurden in einem Ofen (= Mathis-Thermo-Takter) bei 190°C thermisch belastet. Im zeitlichen Abstand von 3 Minuten wurde der Yellowness Index (YI) nach ASTM D-1925-70 bestimmt. Die Ergebnisse sind den folgenden Tabelle 6A und 6B zu entnehmen.

**Tabelle 6A**

| **Stabilisator 3** | | | | | |
|---|---|---|---|---|---|
| **Min** | **Ohne Phosphit YI-Wert** | **CH 300**^{**3)**} **YI-Wert** | **CH 302**^{**5)**} **YI-Wert** | **CD 37-0038**^{**6)**} **YI-Wert** | **CH 304**^{**7)**} **YI-Wert** |
| 0 | 10,26 | 6,79 | 7,05 | 6,19 | 6,37 |
| 3 | 11,00 | 7,13 | 7,65 | 7,17 | 6,71 |
| 6 | 14,31 | 7,98 | 8,55 | 8,07 | 7,56 |
| 9 | 20,65 | 9,27 | 10,02 | 9,58 | 8,48 |
| 12 | 23,13 | 10,41 | 12,00 | 11,26 | 9,79 |
| 15 | 28,18 | 12,58 | 14,33 | 21,87 | 12,09 |
| 18 | 37,32 | 17,04 | 18,84 | 28,28 | 24,37 |
| 21 | 41,42 | 24,65 | 25, 04 | 33,29 | 30,66 |
| 24 | | 30,85 | 31,79 | 39,44 | 36,46 |
| 27 | | 36,40 | 36,37 | | 41,41 |
| 30 | | 41,68 | 40,81 | | |

| | | | | | |
|---|---|---|---|---|---|
| ³⁾ Mark CH 300 = gemischtes Aryl/Alkyl-phosphit (ex Crompton) | | | | | |
| ⁵⁾ Mark CH 302 = gemischtes Alkyl-nonylphenylphosphit (ex Crompton) | | | | | |
| ⁶⁾ CD 37-0038 = Propylenglycol-Bis(didecylphosphit) (ex Crompton) | | | | | |
| ⁷⁾ Mark CH 304 = Tris-isodecyl-phosphit (ex Crompton) | | | | | |

**Tabelle 6B**

| **Stabilisator 9** | | |
|---|---|---|
| **Min** | **Ohne Phosphit YI-Wert** | **CH 302**^{**5)**} **YI-Wert** |
| 0 | 10,10 | 8,48 |
| 3 | 10,13 | 8,98 |
| 6 | 10,22 | 8,91 |
| 9 | 10,60 | 8,81 |
| 12 | 12,33 | 9,28 |
| 15 | 16,36 | 10,03 |
| 18 | 19,16 | 10,94 |
| 21 | 24,75 | 12,13 |
| 24 | 30,42 | 14,53 |
| 27 | 36,77 | 18,89 |
| 30 | 43,05 | 26,16 |

| | | |
|---|---|---|
| ⁵⁾Mark CH 302 = gemischtes Alkyl-nonylphenylphosphit (ex Crompton) | | |

Es zeigt sich, dass die Stabilisierung des chlorhaltigen Polymers durch Verwendung von Alkanolaminen in Kombination mit einer Natriumperchlorat-Formulierung durch Zugabe von Phosphiten noch weiter gesteigert werden kann.

### Beispiel 6: Statischer Hitzetest

Eine Trockenmischung bestehend aus

| | |
|---|---|
| 100,0 Teile | Vinnolit H 2264 = PVC K-Wert 64 ex Vinnolit |
| 4,0 Teile | Kronos 2220 = Titandioxid ex Kronos |
| 6,0 Teile | Omyalite 95 T = Kreide ex Omya |
| 1,0 Teile | Paraloid²⁾ K 125 = Acrylcopolymer |
| 0,4 Teile | Loxiol® G 60 = Distearylphthalat |
| 0,2 Teile | Loxiol® G 21 = Hydroxystearinsäure |
| 0,6 Teile | Marklube 367 = Paraffinwachs ex Crompton |
| 2,0 Teile | Alkamizer II = Hydrotalcit ex Kyowa |
| 0,9 Teile | Stabilisator 1 (gem. Tab. 1) |
| 0,1 Teile | Natriumperchlorat |

und jeweils 0,4 Teile eines Polyols (wie Penta /Dipentaerythrit oder THEIC) und/oder 0,6 Teile CH 300³⁾ wurden auf einem Mischwalzwerk 5 Minuten bei 180 °C gewalzt. Vom gebildeten Walzfell wurden Testfolienstreifen von 0,4 mm Dicke entnommen. Die Folienproben wurden in einem Ofen (= Mathis-Thermo-Takter) bei 190 °C belastet. Im zeitlichen Abstand von 3 Minuten wurden die Yellowness Indices (YI) nach ASTD 1925-70 bestimmt. Die Ergebnisse sind der Tabelle 7 zu entnehmen.

**Tabelle 7**

| **Min** | **Beispiel 6 ohne Stab. 1 YI-Wert** | **Beispiel 6 YI-Wert** | **Beispiel 6 + Penta- erythrit YI-Wert** | **Beispiel 6 + Dipenta- erythrit YI-Wert** | **Beispiel 6 + THEIC**^{**8)**} **YI-Wert** | **Beispiel 6 + CH 300**^{**3)**} **YI-Wert** | **Beispiel 6 + THEIC**^{**8)**} **+ CH 300**^{**3)**} **YI-Wert** | **Beispiel 6 + Penta- erythrit + CH 300**^{**3)**} **YI-Wert** |
|---|---|---|---|---|---|---|---|---|
| 0 | 20,16 | 9,36 | 8,63 | 8,89 | 8,11 | 6,48 | 6,41 | 6,22 |
| 3 | 20,59 | 9,23 | 8,80 | 9,02 | 8,56 | 6,55 | 6,45 | 6,34 |
| 6 | 24,69 | 9,57 | 9,03 | 9,37 | 8,45 | 6,66 | 6,53 | 6,41 |
| 9 | 30,83 | 11,05 | 9,49 | 10,57 | 8,84 | 7,38 | 6,79 | 6,56 |
| 12 | | 16,31 | 12,23 | 14,47 | 10,28 | 8,97 | 7,88 | 7,64 |
| 15 | | 24,63 | 17,25 | 21,37 | 14,22 | 11,42 | 9,51 | 9,43 |
| 18 | | 31,60 | 23,49 | 28,24 | 18,59 | 16,04 | 12,48 | 12,56 |
| 21 | | 36,46 | 29,65 | 32,69 | 23,74 | 21,78 | 16,25 | 16,77 |
| 24 | | 38,99 | 32,81 | 36,87 | 27,76 | 30,50 | 22,26 | 22,85 |
| 27 | | 40,58 | 35,24 | 39,12 | 31,24 | 36,33 | 28,03 | 28,87 |
| 30 | | 41,61 | 37,17 | 40,36 | 33,18 | 39,40 | 32,50 | 32,20 |

| | | | | | | | | |
|---|---|---|---|---|---|---|---|---|
| ⁸) Trishydroxyethylisocyanurat | | | | | | | | |

Es zeigt sich, dass die Stabilisierung des chlorhaltigen Polymers durch Verwendung von Alkanolaminen in Kombination mit einer Natriumperchlorat-Formulierung durch Zugabe von Phosphiten oder Polyolen oder deren Kombinationen noch weiter gesteigert werden kann.

### Beispiel 7: PVC-Preßplatte

Eine Trockenmischung bestehend aus

| | |
|---|---|
| 100,0 Teile | Evipol¹⁾ SH 7020 = PVC K-Wert 70 |
| 47,0 Teile | Dioctylphthalat |
| 3,0 Teile | ESO = epoxidiertes Sojabohnenöl |
| 0,3 Teile | Loxiol® G 71 S = Pentaerythrit-Adipat Complexester-Gleitmittel |
| 0,1 Teile | Calciumstearat |
| 0,5 Teile | 30%ige Natriumperchlorat-Lösung in Butyldiglykol (außer bei 1*) |
| und je 1,0 Teile | eines Stabilisators aus Tabelle 1 |

wurde auf einem Mischwalzwerk 5 Minuten bei 180 °C gewalzt. Vom gebildeten Walzfell wurde eine Preßplatte bei 180 °C in einer vorgeheizten Etagen-Plattenpresse verpreßt. Stärke der Preßplatte 2 mm, Preßdauer 2 Minuten.

Von dieser Preßplatte wurde der Yellowness Index (YI) nach ASTM D 1925 70 und die Transparenz in % nach ASTM D 2805-80 gemessen. Die Ergebnisse sind der Tabelle 8 zu entnehmen.

Geringe YI-Werte bedeuten eine gute Stabilisierung bzw. Anfangsfarbe. Hohe Prozentzahlen bedeuten eine gute Transparenz.

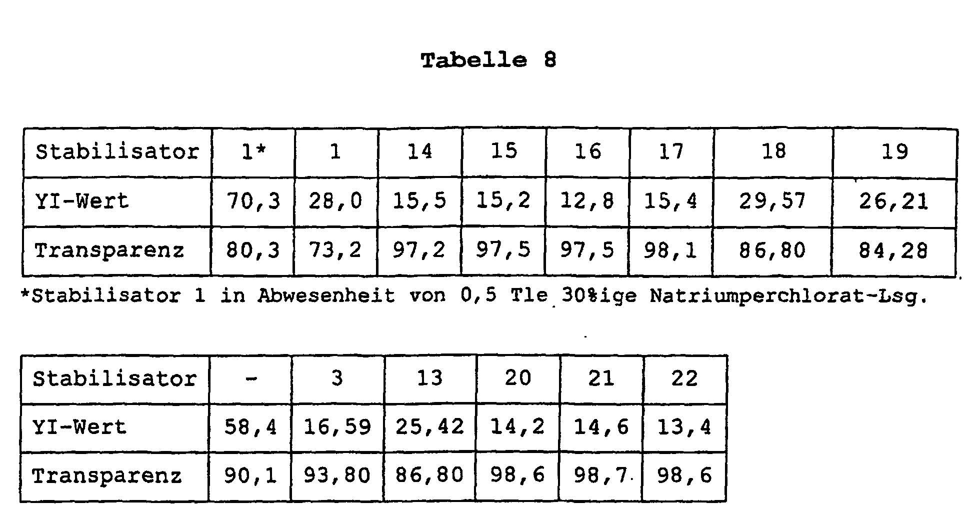

Es zeigt sich, daß die Verwendung von Alkanolaminen in Kombination mit einer Natriumperchlorat-Formulierung zu einer deutlichen Stabilisierung des chlorhaltigen Polymers führt.

## Patentansprüche

1. Stabilisatormischung zur Stabilisierung von chlorhaltigen Polymeren, umfassend mindestens
a) ein Perchlorat-Salz und
b) ein Alkanolamin der Formel (I) 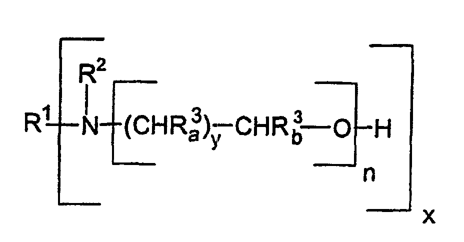
worin bedeuten
x = 1, 2 oder 3;
y = 1, 2, 3, 4, 5 oder 6;
n = 1 - 10;
R¹,R² = unabhängig voneinander H, C₁-C₂₂-Alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-Alkenyl, C₂-C₁₈-Acyl, C₄-C₈-Cycloalkyl, welches in β-Stellung OH-substituiert sein kann, C₆-C₁₀-Aryl, C₇-C₁₀-Alkaryl oder C₇-C₁₀-Aralkyl, oder wenn x = 1, können R¹ und R² zusätzlich zusammen mit dem N einen geschlossenen 4-10 gliedrigen Ring aus Kohlenstoffatomen und gegebenenfalls bis zu 2 Heteroatomen bilden, oder wenn x = 2, kann R¹ zusätzlich für C₂-C₁₈-Alkylen stehen, das an beiden β-. Kohlenstoff-atomen mit OH substituiert und/oder durch 1 oder mehrere O-Atome und/oder 1 oder mehrere NR²-Gruppen unterbrochen sein kann, oder für dihydroxysubstituiertes Tetrahydrodicyclopentadienylen, dihydroxysubstituiertes Ethylcyclohexanylen, dihydroxysubstituiertes 4,4'-Dimethylcyclohexanylen, Dicyclohexylmethanylen oder 3,3'-Dimethyldicyclohexyl-methanylen stehen, und wenn x = 3, kann R¹ zusätzlich für trihydroxysubstituiertes (Tri-N-propylisocyanurat)triyl stehen;
R³ₐ, R³_{b} = unabhängig voneinander C₁-C₂₂-Alkyl, C₂-C₆-Alkenyl, C₆-C₁₀-Aryl, H oder CH₂-X-R⁵ , wobei X = O, S, -O-CO- oder -CO-O-;
R⁴ = C₁-C₁₈-Alkyl/Alkenyl oder Phenyl; und
R⁵ = H, C₁-C₂₂-Alkyl, C₂-C₂₂-Alkenyl oder C₆-C₁₀-Aryl.

2. Stabilisatormischung zur Stabilisierung von chlorhaltigen Polymeren, umfassend mindestens
a) ein Perchlorat-Salz und
b) ein Umsetzungsprodukt aus einem mono- oder polyfunktionellen Epoxid und Ammoniak oder einem mono- oder polyfunktionellen Dialkyl(Aryl)- oder Monoalkyl(Aryl)amin.

3. Stabilisatorgemisch gemäß Anspruch 2, wobei das polyfunktionelle Epoxid Dicyclopentadien-diepoxid, Vinyl-cyclohexen-diepoxid, Bisphenol-A-diglycidylether oder Trisglycidylisocyanurat und das Dialkylamin Diethanolamin oder Diisopropanolamin und das Monoalkylamin Monoethanolamin oder Monoisopropanolamin darstellt.

4. Stabilisatormischung nach Anspruch 1, wobei in der Verbindung mit der allgemeinen Formel (I)
R³ₐ und R³_{b} unabhängig voneinander H oder CH₃ sind und y = 1 ist.

5. Stabilisatormischung nach einem der Ansprüche 1 oder 4, wobei in der Verbindung mit der allgemeinen Formel (I)
R¹ = R² = CH₂-CHR³_{b}-OH ist.

6. Stabilisatormischung nach einem der Ansprüche 1, 4 oder 5, wobei die Verbindungen der allgemeinen Formel (I) Tris(2-hydroxy-1-propyl)amin, Tris(2-hydroxyethyl) amin, Bis(2-hydroxyethyl)-2-hydroxy-1-propyl)amin oder Alkyl/Alkenyl-bis(2-hydroxyethyl) amin, Alkyl/Alkenyl(2-hydroxy-1-propyl) amin, N-(2-Hydroxyhexadecyl)diethanolamin, N-(2-hydroxy-3-octyloxy-propyl)diethanolamin, N-(2-hydroxy-3-decyloxy-propyl)diethanolamin oder Gemische hiervor sind..

7. Stabilisatormischung nach einem der Ansprüche 1 bis 6, wobei das Perchlorat-Salz eine Verbindung der Formel M(ClO₄)ₙ ist, wobei M für Li, Na, K, Mg, Ca, Sr, Ba, Zn, Al, La, Ce oder ein Hydrotalcitschichtgitterkation steht; n ist entsprechend der Wertigkeit von M 1, 2 oder 3 oder bei Vorliegen eines Hydrotalcitschichtgitterkations O < n ≦ 1.

8. Stabilisatormischung nach einem der Ansprüche 1 bis 7, wobei in dem Perchlorat-Salz M = Na oder K und n = 1 ist.

9. Stabilisatormischungen gemäß einem der Ansprüche 1 bis 8, zusätzlich ein Enamin, ein Indol oder einen Harnstoff enthaltend.

10. Stabilisatormischung gemäß einem der Ansprüche 1 bis 9, zusätzlich einen entwässerten Hydrotalcit oder einen Zeolith enthaltend.

11. Stabilisatormischung nach einem der Ansprüche 1 bis 10, der zusätzlich gegebenenfalls Metallseifen enthält und/oder gegebenenfalls einen weiteren Stoff aus der Gruppe der Polyole und Disaccharidalkohole, Glycidylverbindungen, Hydrotalcite, Alkali/Erdalkalialumosilikate, Alkali/Erdalkalihydroxide/oxide oder -(hydrogen)carbonate oder -carboxylate, Füllstoffe/Pigmente, Weichmacher, Antioxidantien, Lichtschutzmittel, optische Aufheller, Gleitmittel und epoxidierte Fettsäureester enthält.

12. Stabilisatormischung nach einem der Ansprüche 1 bis 11, wobei zusätzlich ein Phosphit enthalten ist und/oder mögliche Reaktionsprodukte von Phosphit mit der Komponente a) und/oder b).

13. Stabilisatormischung nach einem der Ansprüche 1 bis 12, wobei das zusätzliche Phosphit Distearylpentaerythrit-diphosphit, Triphenylphosphit, Tris-nonylphenylphosphit, Phenyldidecylphosphit, Poly(dipropylenglykol)phenyl-phosphit, Tetraphenyldipropylenglykol-diphosphit, Tetra-isodecyldipropylenglykol-diphosphit, Tris-dipropylenglykolphosphit, Decyldiphenylphosphit, Trioctylphosphit, Trilaurylphosphit oder (Nonylphenyl_{1,5}-C₁₂/C₁₃-alkyl)_{1,5}-phosphit ist.

14. Zusammensetzung, enthaltend ein chlorhaltiges Polymer und eine Stabilisatormischung nach einem der Ansprüche 1 bis 13.

15. Zusammensetzung nach Anspruch 14, **dadurch gekennzeichnet, daß** bezogen auf 100 Gew.-Teile chlorhaltiges Polymer, 0,01-10 Gew.-Teile der Verbindung der allgemeinen Formel (I) und 0,001-5 Gew.-Teile des Perchlorat-Salzes und gegebenenfalls 0,05-5 Gew.-Teile eines Phosphits enthalten sind.

16. Verfahren zur Stabilisierung von chlorhaltigen Polymeren durch Zusatz einer Stabilisatormischung nach einem der Ansprüche 1 bis 13 zu einem chlorhaltigen Polymer.

17. Verfahren zur Stabilisierung von chlorhaltigen Polymeren gemäß Anspruch 16, **dadurch gekennzeichnet, daß** das chlorhaltige Polymer Weich-PVC darstellt.

18. Verfahren zur Stabilisierung von chlorhaltigen Polymeren gemäß Anspruch 17, **dadurch gekennzeichnet, daß** das Weich-PVC zur Herstellung von Fußböden, KFZ-Teilen, Weich-Folien, Schläuchen, Spritzgußteilen oder Drahtummantelung dient.

19. Verfahren zur Stabilisierung von chlorhaltigen Polymeren gemäß Anspruch 16, **dadurch gekennzeichnet, daß** das chlorhaltige Polymer Hart-PVC darstellt.

20. Verfahren zur Stabilisierung von chlorhaltigen Polymeren gemäß Anspruch 19, **dadurch gekennzeichnet, daß** das chlorhaltige Polymer zur Herstellung von Folien (auch Luvitherm), PVC-Rohren oder Profilen dient.

21. Gebrauchsgegenstände, enthaltend PVC, welches durch eine Stabilisatormischung nach einem der Ansprüche 1 bis 13 stabilisiert ist.

## Claims

1. Stabilizer mixture for stabilizing chlorine-containing polymers, comprising at least
a) one perchlorate salt and
b) one alkanolamine of the formula (I) 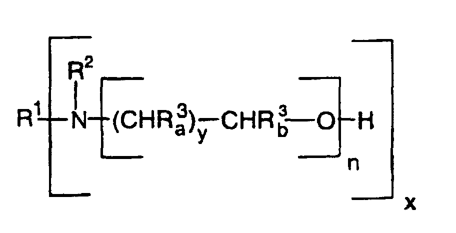
where
x = 1, 2 or 3
y = 1, 2, 3, 4, 5 or 6,
n = 1 - 10
R¹, R² = independently of one another, H, C₁-C₂₂-alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-alkenyl, C₂-C₁₈-acyl, C₄-C₈-cycloalkyl, which may be OH-substituted in the β position, C₆-C₁₀-aryl, C₇-C₁₀-alkaryl or C₇-C₁₀-aralkyl, or when x = 1, R¹ and R² may additionally combine with the N to form a closed 4-10-membered ring of carbon atoms and optionally up to 2 heteroatoms, or when x = 2, R¹ may additionally be C₂-C₁₈-alkylene which may be OH-substituted at both β-carbon atoms and/or may be interrupted by one or more O-atoms and/or one or more NR² groups, or dihydroxy-substituted tetrahydrodicyclopentadienylene, dihydroxy-substituted ethylcyclohexanylene, dihydroxy-substituted 4,4'-(bisphenol A dipropyl ether)ylene, isophoronylene, dimethylcyclohexanylene, dicyclohexylmethanylene, or 3,3'-dimethyldicyclohexylmethanylene, and if x = 3, R¹ may also be trihydroxy-substituted (tri-N-propyl isocyanurate)triyl;
R³ₐ, R³_{b} = independently of one another, C₁-C₂₂-alkyl, C₂-C₆-alkenyl, C₆-C₁₀-aryl, H or CH₂-X-R⁵, where X = O, S, -O-CO- or -CO-O-;
R⁴ = C₁-C₁₈-alkyl/alkenyl or phenyl, and
R⁵ = H, C₁-C₂₂-alkyl, C₂-C₂₂-alkenyl or C₆-C₁₀-aryl.

2. Stabilizer mixture for stabilizing chlorine-containing polymers, encompassing at least
a) one perchlorate salt and
b) one reaction product made from a mono- or polyfunctional epoxide and from ammonia or from a mono- or polyfunctional dialkyl(aryl)- or monoalkyl(aryl)amine.

3. Stabilizer mixture according to Claim 2, where the polyfunctional epoxide is dicyclopentadiene diepoxide, vinylcyclohexene diepoxide, bisphenol A diglycidyl ether or trisglycidyl isocyanurate and the dialkylamine is diethanolamine or diisopropanolamine and the monoalkylamine is monoethanolamine or monoisopropanolamine.

4. Stabilizer mixture according to Claim 1, here in the compound having the general formula (I) R³ₐ and R³_{b} are, independently of one another ,H or CH₃ and y = 1.

5. Stabilizer mixture according to any of Claims 1 or, where in the compound having the general formula (I) R¹ = R² = CH₂-CHR³_{b}-OH.

6. Stabilizer mixture according to any of Claims 1, 4 or 5 where the compounds of the general formula (I) are tris(2-hydroxy-1-propyl)amine, tris(2-hydroxyethyl)amine, bis(2-hydroxyethyl) (2-hydroxy-1-propyl)amine or alkyl/alkenylbis(2-hydroxyethyl)-amine, alkyl/alkenyl(2-hydroxy-1-propyl)amine, N-(2-hydroxyhexadecyl)diethanolamine, N-(2-hydroxy-3-octyloxypropyl)diethanolamine, N-(2-hydroxy-3-decyloxypropyl)diethanolamine or a mixture of these.

7. Stabilizer mixture according to any of Claims 1 to 6, where the perchlorate salt is a compound of the formula M(ClO₄)ₙ, where M is Li, Na, K, Mg, Ca, Sr, Ba, Zn, Al, La, Ce or a hydrotalcite layer-lattice cation; n is 1, 2 or 3, depending on the valency of M or, in the case of a hydrotalcite layer-lattice cation, O < n ≦ 1.

8. Stabilizer mixture according to any of Claims 1 to 7, where, in the perchlorate salt, M = Na or K and n = 1.

9. Stabilizer mixtures according to any of Claims 1 to 8, also comprising an enamine, an indole or urea.

10. Stabilizer mixture according to any of Claims 1 to 9, also comprising an anhydrous hydrotalcite or a zeolite.

11. Stabilizer mixture according to any of Claims 1 to 10, which also, where appropriate, comprises metal soaps and/or, where appropriate, comprises one other substance from the group consisting of the polyols and disaccharide alcohols, glycidyl compounds, hydrotalcites, alkali metal/alkaline earth metal aluminosilicates, alkali metal/alkaline earth metal hydroxides/oxides, or alkali metal/alkaline earth metal (hydrogen)carbonates, or carboxylates, fillers/pigments, plasticizers, antioxidants, light stabilizers, optical brighteners, lubricants and epoxidized fatty esters.

12. Stabilizer mixture according to any of Claims 1 to 11, additionally containing a phosphite and/or possible products of reaction of phosphite with component a) and/or b).

13. Stabilizer mixture according to any of Claims 1 to 12, where the additional phosphite is distearyl pentaerythritol diphosphite, triphenyl phosphite, trisnonylphenyl phosphite, phenyl didecyl phosphite, polydipropylene glycol phenyl phosphite, tetraphenyl dipropylene glycol diphosphite, tetraisodecyl dipropylene glycol diphosphite, tris (dipropylene glycol) phosphite, decyl diphenyl phosphite, trioctyl phosphite, trilauryl phosphite or (nonylphenyl_{1.5} C₁₂/C₁₃-alkyl)_{1.5} phosphite.

14. Composition comprising a chlorine-containing polymer and a stabilizer mixture according to any of Claims 1 to 13.

15. Composition according to Claim 14, **characterized in that**, based on 100 parts by weight of chlorine-containing polymer, there are from 0.01 to 10 parts by weight of the compound of the general formula (I) and from 0.001 to 5 parts by weight of the perchlorate salt and, if appropriate, from 0.05 to 5 parts by weight of a phosphite.

16. Process for stabilizing chlorine-containing polymers by adding a stabilizer mixture according to any of Claims 1 to 13 to a chlorine-containing polymer.

17. Process for stabilizing chlorine-containing polymers according to Claim 16, **characterized in that** the chlorine-containing polymer is plasticized PVC.

18. Process for stabilizing chlorine-containing polymers according to Claim 17, **characterized in that** the plasticized PVC serves for the production of flooring, of motor vehicle parts, of plasticized films, of tubing, of injection mouldings, or of wire sheathing.

19. Process for stabilizing chlorine-containing polymers according to Claim 16, **characterized in that** the chlorine-containing polymer is unplasticized PVC.

20. Process for stabilizing chlorine-containing polymers according to Claim 19, **characterized in that** the chlorine-containing polymer serves for the production of films (including Luvitherm), of PVC pipes or of profiles.

21. Consumer articles comprising PVC stabilized by a stabilizer mixture according to any of Claims 1 to 13.

## Revendications

1. Mélange de stabilisateurs destiné à la stabilisation de polymères contenant du chlore, comprenant au moins
a) un sel perchlorate et
b) une alcanolamine de formule (I) 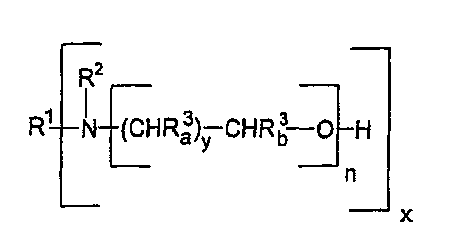
dans laquelle
x = 1, 2 ou 3 ;
y = 1, 2, 3, 4, 5 ou 6 ;
n = 1 - 10 ;
R¹, R² = indépendamment l'un de l'autre, H, alkyle en C₁ à C₂₂, -[-(CHR³ₐ)_{y}-CHR³_{b}-O-]ₙ-H, -[-(CHR³ₐ)_{y}-CHR³_{b}-O-]ₙ-CO-R⁴, alcényle en C₂ à C₂₀, acyle en C₂ à C₁₈, cycloalkyle en C₄ à C₈, qui peut être substitué par OH en position β, aryle en C₆ à C₁₀, alkaryle en C₇ à C₁₀, ou aralkyle en C₇ à C₁₀, ou, lorsque x = 1, R¹ et R² peuvent former en outre, ensemble avec l'atome N, un cycle fermé de 4 à 10 chaînons constitué d'atomes de carbone et le cas échéant jusqu'à 2 hétéroatomes, ou, lorsque x = 2, R¹ peut en outre représenter alkylène en C₂ à C₁₈ qui peut être substitué sur les deux atomes de carbone β par OH et/ou être interrompu par un ou plusieurs atomes d'oxygène et/ou un ou plusieurs groupes NR² ou représenter tétrahydrodicyclopentadiénylène substitué par dihydroxy, éthylcyclohexanylène substitué par dihydroxy, 4,4'-(bisphénol A-dipropyléther)ylène substitué par dihydroxy, isophoronylène, diméthylcyclohexanylène, dicyclohexylméthanylène ou 3,3'-diméthyldicyclohexylméthanylène et, lorsque x = 3, R¹ peut en outre représenter (tri-N-propylisocyanurate)triyle substitué par trihydroxy ;
R³ₐ, R³_{b} = indépendamment l'un de l'autre alkyle en C₁ à C₂₂, alcényle en C₂ à C₆, aryle en C₆ à C₁₀, H ou CH₂-X-R⁵, où X = O, S, -O-CO- ou -CO-O- ;
R⁴ = alkyle/alcényle en C₁ à C₁₈ ou phényle ; et
R⁵ = H, alkyle en C₁ à C₂₂, alcényle en C₂ à C₂₂ ou aryle en C₆ à C₁₀.

2. Mélange de stabilisateurs destiné à la stabilisation de polymères contenant du chlore, comprenant au moins
a) un sel perchlorate et
b) un produit de transformation d'un époxyde monofonctionnel ou polyfonctionnel et d'ammoniaque où d'une dialkyl(aryl)amine ou d'une monoalkyl(aryl)amine monofonctionnelle ou polyfonctionnelle.

3. Mélange de stabilisateurs selon la revendication 2, l'époxyde polyfonctionnel étant le diépoxyde de dicyclopentadiène, le diépoxyde de vinylcyclohexène, le bisphénol-A-diglycidyléther ou le trisglycidylisocyanurate et la dialkylamine étant la diéthanolamine ou la diisopropanolamine et la monoalkylamine étant la monoéthanolamine ou la monoisopropanolamine.

4. Mélange de stabilisateurs selon la revendication 1, où, dans le composé de formule générale (I), R³ₐ et R³_{b} représentent, indépendamment l'un de l'autre, H ou CH₃ et y = 1.

5. Mélange de stabilisateurs selon l'une quelconque des revendications 1 ou 4, où, dans le composé de formule générale (I), R¹ = R² = CH₂-CHR³_{b}-OH.

6. Mélange de stabilisateurs selon l'une quelconque des revendications 1, 4 ou 5, les composés de formule générale (I) étant la tris(2-hydroxy-1-propyl) amine, la tris(2-hydroxyéthyl)amine, la bis(2-hydroxyéthyl)-2-hydroxy-1-propyl)amine ou l'alkyl/ alcényl-bis(2-hydroxyéthyl)amine, l'alkyl/alcényl(2-hydroxy-1-propyl)amine, la N-(2-hydroxyhexadécyl)diéthanolamine, la N-(2-hydroxy-3-octyloxypropyl)diéthanolamine, la N-(2-hydroxy-3-décyloxypropyl)diéthanolamine ou des mélanges de ceux-ci.

7. Mélange de stabilisateurs selon l'une quelconque des revendications 1 à 6, le sel perchlorate étant un composé de formule M(ClO₄)ₙ, où M représente Li, Na, K, Mg, Ca, Sr, Ba, Zn, Al, La, Ce ou un cation de réseau à couches d'hydrotalcite ; n représente 1, 2 ou 3, en fonction de la valence de M ou, dans le cas de l'existence d'un cation de réseau à couches d'hydrotalcite, 0 < n ≤ 1.

8. Mélange de stabilisateurs selon l'une quelconque des revendications 1 à 7, où, dans le sel perchlorate, M = Na ou K et n = 1.

9. Mélanges de stabilisateurs selon l'une quelconque des revendications 1 à 8, contenant en outre une énamine, un indole ou une urée.

10. Mélange de stabilisateurs selon l'une quelconque des revendications 1 à 9, contenant en outre une hydrotalcite déshydratée ou une zéolithe.

11. Mélange de stabilisateurs selon l'une quelconque des revendications 1 à 10, qui contient en outre le cas échéant des savons métalliques et/ou le cas échéant une autre substance du groupe des polyols et des alcools de disaccharide, des composés de glycidyle, des hydrotalcites, des alumosilicates de métal alcalin/alcalino-terreux, des hydroxydes/oxydes de métal alcalin/alcalino-terreux ou des (hydrogéno)carbonates de métal alcalin/alcalino-terreux ou des (hydrogéno)carboxylates de métal alcalin/alcalino-terreux, des charges/pigments, des plastifiants, des antioxydants, des agents de protection contre la lumière, des azurants optiques, des lubrifiants et des esters d'acide gras époxydés.

12. Mélange de stabilisateurs selon l'une quelconque des revendications 1 à 11, contenant en outre un phosphite et/ou des éventuels produits de réaction de phosphite avec les composants a) et/ou b).

13. Mélange de stabilisateurs selon l'une quelconque des revendications 1 à 12, le phosphite supplémentaire étant le distéarylpentaérythritoldiphosphite, le triphénylphosphite, le tris-nonylphénylphosphite, le phényldidécylphosphite, le poly-(dipropylèneglycol)phénylphosphite, le tétra-phényldipropylèneglycoldiphosphite, le tétra-iso-décyl-dipropylèneglycoldiphosphite, le trisdipropylèneglycolphosphite, le décyldiphénylphosphite, le trioctylphosphite, le trilaurylphosphite ou le (nonylphényl_{1,5}-alkyle en C₁₂/C₁₃)_{1,5}-phosphite.

14. Composition contenant un polymère contenant du chlore et un mélange de stabilisateurs selon l'une quelconque des revendications 1 à 13.

15. Composition selon la revendication 14, **caractérisée en ce qu'**elle contient, par rapport à 100 parties en poids de polymère contenant du chlore, 0,01 à 10 parties en poids du composé de formule générale (I) et 0,001 à 5 parties en poids du sel perchlorate et le cas échéant 0,05 à 5 parties en poids d'un phosphite.

16. Procédé pour la stabilisation de polymères contenant du chlore par addition d'un mélange de stabilisateurs selon l'une quelconque des revendications 1 à 13 à un polymère contenant du chlore.

17. Procédé pour la stabilisation de polymères contenant du chlore selon la revendication 16, **caractérisé en ce que** le polymère contenant du chlore est du PVC souple.

18. Procédé pour la stabilisation de polymères contenant du chlore selon la revendication 17, **caractérisé en ce que** le PVC souple sert à la réalisation de sols, de pièces pour véhicules, de films souples, de flexibles, de pièces moulées par injection ou de gaine de fil.

19. Procédé pour la stabilisation de polymères contenant du chlore selon la revendication 16, **caractérisé en ce que** le polymère contenant du chlore est du PVC rigide.

20. Procédé pour la stabilisation de polymères contenant du chlore selon la revendication 19, **caractérisé en ce que** le polymère contenant du chlore sert à la réalisation de feuilles (également du Luvitherm), de tuyaux en PVC ou de profils.

21. Objets d'utilisation, contenant du PVC stabilisé par un mélange de stabilisateurs selon l'une quelconque des revendications 1 à 13.
